(19) Europäisches Patentamt
European Patent Office
Office européen des brevets

(11) **EP 3 374 655 B1**

(12) **EUROPÄISCHE PATENTSCHRIFT**

(45) Veröffentlichungstag und Bekanntmachung des Hinweises auf die Patenterteilung:
**11.01.2023  Patentblatt 2023/02**

(21) Anmeldenummer: **16793911.5**

(22) Anmeldetag: **10.11.2016**

(51) Internationale Patentklassifikation (IPC):
**F16D 55/226** (2006.01)    **F16D 65/092** (2006.01)

(52) Gemeinsame Patentklassifikation (CPC):
**F16D 65/092; F16D 55/226;** F16D 2055/0008;
F16D 2066/005

(86) Internationale Anmeldenummer:
**PCT/EP2016/077261**

(87) Internationale Veröffentlichungsnummer:
**WO 2017/081147 (18.05.2017 Gazette 2017/20)**

(54) **SCHEIBENBREMSE UND BREMSBELAGSATZ**

DISC BRAKE AND PAD ASSEMBLY

FREIN À DISQUE ET JEU DE GARNITURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2015  DE 102015119509**

(43) Veröffentlichungstag der Anmeldung:
**19.09.2018  Patentblatt 2018/38**

(73) Patentinhaber: **KNORR-BREMSE Systeme für Nutzfahrzeuge GmbH
80809 München (DE)**

(72) Erfinder:
• **PAHLE, Wolfgang
83707 Bad Wiessee (DE)**
• **PETSCHKE, Andreas
94127 Neuburg am Inn (DE)**

(56) Entgegenhaltungen:
**EP-A2- 0 268 095          WO-A1-99/50566
WO-A1-2016/171210          DE-A1- 2 211 013
DE-A1-102012 002 734       FR-A1- 2 206 457
US-A1- 2009 277 729        US-A1- 2016 169 306
US-B1- 8 540 061**

**Beschreibung**

Die vorliegende Erfindung betrifft eine Scheibenbremse nach dem Oberbegriff des Anspruchs 1.

Derartige Scheibenbremsen werden insbesondere in Nutzfahrzeugen eingesetzt und werden häufig pneumatisch betätigt. Eine Ausführung des Bremssattels derartiger Scheibenbremsen ist als Schiebesattel ausgebildet und wird z.B. bei engem Bauraum verwendet.

Der Bremssattel wird üblicherweise über zwei Lagerholme, welche als Fest- und Loslager ausgebildet sind, mit dem sogenannten Bremsträger verbunden. In dem Bremsträger sind die Bremsbeläge beidseitig einer Bremsscheibe angeordnet, verschiebbar geführt und in Belagschächten zwischen so genannten Bremsträgerhörnern in dem Bremsträger durch einen Belaghaltebügel federbelastet gehalten. Die Bremsbeläge weisen häufig eine Belagträgerplatte auf, welche auf einer Seite mit einem Reibbelag versehen ist.

Bei Scheibenbremsen, insbesondere bei Scheibenbremse mit nur einem Krafteinleitungselement, kann konstruktionsbedingt ein ungleichmäßiger Verschleiß der Bremsbeläge auftreten. Die Bremsbeläge können bezogen auf eine Ebene ihrer Belagträgerplatten einerseits in radialer Richtung, als auch in Umfangsrichtung nicht parallel verschleißen, was als Radial- bzw. Tangentialverschleiß bezeichnet wird.

Zur Halterung der Bremsbeläge in Belagschächten sind unterschiedliche Lösungen vorgeschlagen worden, wobei die WO 2013/143993 A1 Beispiel zur Vermeidung von so genannten Restschleifmomenten angibt.

Die US 8,540, 061 B1 beschreibt ein Bremsbelaghaltesystem.

DE 10 2012 002 734 A1 gibt ein Belaghaltesystem zur Vermeidung von Drehung der Bremsbeläge während eines Bremsvorgangs an.

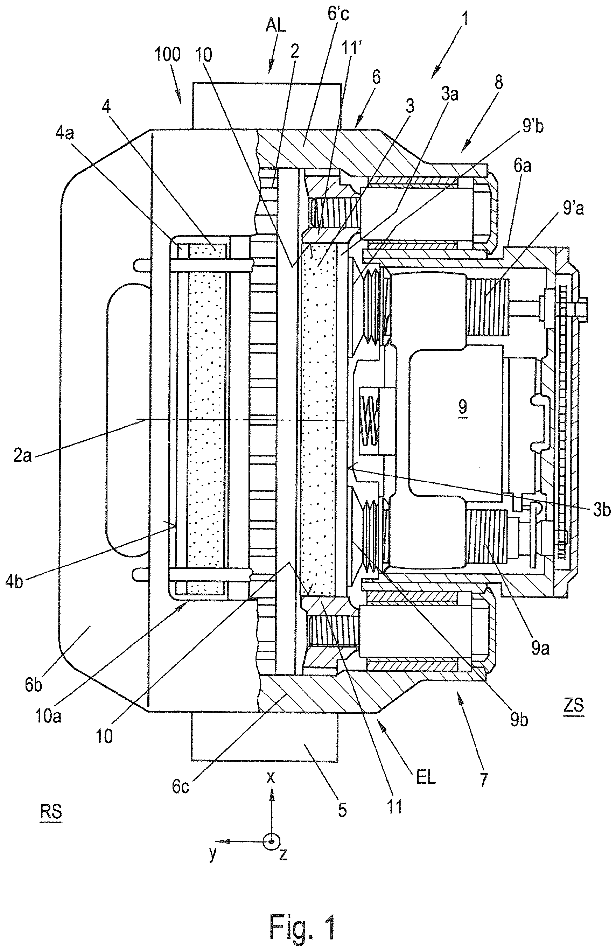

WO 99/50566 A1 betrifft eine Scheibenbremse mit einem Bremsträger, der an einem Gehäuse befestigt ist. Der Bremsträger hat eine unsymmetrische erste und zweite Schiene. Die erste Schiene weist einen ersten und einen zweiten Abschnitt auf, von denen jeder eine begrenzende Oberfläche aufweist, die von einer ersten Auflagefläche getrennt ist. Die zweite Schiene weist erste und zweite Abschnitte auf, die jeweils eine von einer zweiten Auflagefläche getrennte Ausricht- oder Haltefläche aufweisen. Bremsbelagträger des ersten und zweiten Bremsbelags Pad haben einen ersten Vorsprung, der nur die Begrenzungsflächen der ersten Schiene berührt, und einen zweiten Vorsprung, der nur die zweite Auflagefläche der zweiten Schiene berührt. Eine Feder 88 greift in den ersten und zweiten Bremsbelagträger ein, um die Tangentenkontaktlinie mit der zweiten Lagerfläche aufrechtzuerhalten. Die Neigung der Lagerflächen wird so gewählt, dass die Bremskraft während einer Bremsung durch den ersten und zweiten Bremsbelagträger in den Bremsträger übertragen wird. Die Feder 88 greift in Abschnitte eines jeden Bremsbelagträgers ein, um die zweiten Vorsprünge 68 dieser Bremsbelagträger 62, 62' in die jeweilige Tangentenkontaktlinie mit zweiten Auflageflächen in der zweiten Schiene zu drücken (Anspruch 13). Die Feder 88 umfasst einen Schlaufenabschnitt 86, der an Ohren 70, 70' an dem jeweiligen Bremsbelagträger 62, 62' angeordnet ist, und einen Hakenabschnitt 89, wobei der Hakenabschnitt 89 an dem Bremsträger angebracht ist, um eine kontinuierliche Kraft zur Aufrechterhaltung der Tangentenkontaktlinie zwischen den zweiten Vorsprüngen 68 und den Auflageflächen 54, 54' aufrechtzuerhalten (Anspruch 14). Wie aus Fig. 1, 4 und 8 eindeutig zu erkennen ist, ist nur eine Feder 88 an einer Seite (in den Figuren 1, 4, 8 auf der linken Seite der Bremsbelagträger) angeordnet und steht mit jeweils einem Bremsbelagträger nur einseitig in Eingriff. Die Feder 88 ist eindeutig als eine Druckfeder ausgebildet.

Vor dem Hintergrund dieser Lösungen besteht weiterhin ein ständiger Bedarf nach verlängerter Standzeit von Bremsbelägen und somit von Bremsen und Bremsenbauteilen bei gleichzeitiger Kostenreduzierung.

Der Erfindung liegt daher die Aufgabe zu Grunde, eine verbesserte Scheibenbremse mit verlängerter Standzeit von Bremsbelägen zu schaffen.

Die Erfindung löst diese Aufgabe durch den Gegenstand des Anspruchs 1.

Demgemäß umfasst eine Scheibenbremse für ein Fahrzeug, insbesondere für ein Nutzfahrzeug, eine Bremsscheibe mit einer Bremsscheibendrehachse, mindestens einen zuspannseitigen und einen rückenseitigen Bremsbelag mit einer jeweiligen Belagträgerplatte, einen Bremsträger, der die mindestens zwei Bremsbeläge in einem jeweiligen Belagschacht zwischen einem einlaufseitigen und einem auslaufseitigen Bremsträgerhorn und einem Brückenabschnitt aufnimmt, wobei einer der mindestens zwei Bremsbeläge in dem zugehörigen Belagschacht mit mindestens einem der Bremsträgerhörner in formschlüssiger Halterung in radialer Richtung in Bezug auf die Bremsscheibendrehachse gehalten und federbelastet mit einer Vorspannkraft beaufschlagt ist, welche den einen der mindestens zwei Bremsbeläge von dem Brückenabschnitt des Bremsträgers weg in radialer Richtung in Bezug auf die Bremsscheibendrehachse gegen die formschlüssige Halterung des mindestens einen Bremsträgerhorns drückt, und einen die Bremsscheibe übergreifenden Bremssattel. An dem einlaufseitigen Bremsträgerhorn und an dem auslaufseitigen Bremsträgerhorn ist jeweils eine formschlüssige Halterung mindestens des zuspannseitigen Bremsbelags in dem Belagschacht vorgesehen, wobei die formschlüssige Halterung mit Nasen mit Hinterschnitten, Vorsprüngen der Belagträgerplatte des zuspannseitigen Bremsbelags und der Vorspannkraft eine Schrägverschleißkompensationseinrichtung bildet.

Es hat sich überraschenderweise herausgestellt, dass eine formschlüssige Halterung zumindest des zuspannseitigen Bremsbelags an beiden Bremsträgerhörnern zusammen mit einer Vorspannkraft eine Schrägverschleißkompensationseinrichtung bildet. Berechnungsergebnisse zeigen gegenüber dem Stand der Technik eine gleichmäßigere Flächenpressung für den Bremsbelag aufgrund der formschlüssigen Halterung einschließlich der Vorspannkraft auf. Damit wird vorteilhaft eine Reduktion des Radial- bzw. Tangentialverschleißes erheblich reduziert, wie durch die Berechnungen nachgewiesen werden konnte.

Die Vorspannkraft kann z.B. durch Federn erzeugt werden, die als Druckfedern unterhalb des Bremsbelags angeordnet sind und sich an dem Belagschacht, also dem ortsfesten Bremsträger, abstützen.

Es ist vorteilhaft, wenn der zuspannseitige Bremsbelag im nicht betätigten Zustand der Scheibenbremse mit einer Oberseite eines jeden Vorsprungs jeweils an einer Unterseite einer jeden Nase durch die Vorspannkraft beaufschlagt anliegt. Dies ist vorteilhaft, da auf diese Weise bei einem Bremsvorgang sofort ohne Überbrückung eines Spiels Kräfte erzeugt werden, welche den Bremsbelag, z.B. durch Erzeugung von vorteilhaften Drehmomenten, derart beeinflussen, dass ein Radial- bzw. Tangentialverschleiß verringert wird. Zusätzlich wird auch eine Geräuscherzeugung reduziert.

In einer Ausführung stehen die Nasen der formschlüssigen Halterungen von jeweils einem der Bremsträgerhörner in den Belagschacht hervor. So können sie mit den Vorsprüngen der Belagträgerplatte einfach zusammen wirken, wobei ein Einsetzen des Bremsbelags parallel zur Richtung der Bremsscheibendrehachse in den Belagschacht ermöglicht ist.

Dazu ist es vorgesehen, dass die Vorsprünge der zuspannseitigen Belagträgerplatte des zuspannseitigen Bremsbelags jeweils nach außen von einer jeweiligen Seite der zuspannseitigen Belagträgerplatte hervorstehen, wobei über ihnen Ausnehmungen zur Aufnahme der Nasen in die Belagträgerplatte jeweils von der Seite her eingeformt sind. Damit wird eine vorteilhafte formschlüssige Halterung gebildet.

In einer Ausführung verlaufen die Unterseite einer jeden Nase und die jeweils zugehörige Oberseite eines jeden Vorsprungs in einem Winkel schräg zu einer Wirkungslinie einer Bremskraft, wobei die Wirkungslinie der Bremskraft parallel zu Flächen von Stützabschnitten des Brückenabschnitts des Bremsträgers verläuft, wobei diese Stützabschnitte eine untere Auflage des zuspannseitigen Belagschachtes bilden. Diese Konfiguration bietet den Vorteil, dass bei den auftretenden Kräften, mit denen der Bremsbelag dabei beaufschlagt wird, die Belagträgerplatte mit ihrer auslaufseitigen Seite vollflächig an dem auslaufseitigen Bremsträgerhorn zur Anlage kommt. Zusätzlich wird die Haftreibung zwischen den schrägen Flächen der Unterseite der einlaufseitigen Nase und der Oberseite des einlaufseitigen Vorsprungs überschritten, so dass eine Relativbewegung zwischen dieser Unterseite und dieser Oberseite entsteht. Auf diese Weise wird vorteilhaft eine Überlastung verhindert. Zusätzlich ergibt sich der Vorteil, dass der Bremsbelag sich aufgrund dieser Relativbewegung nicht im Belagschacht, z.B. durch Korrosion, festsetzen kann.

Eine weitere Ausführung sieht vor, dass die einlaufseitige Nase und die zugehörige Oberseite des einlaufseitigen Vorsprungs spiegelbildlich zu der auslaufseitigen Nase und der zugehörige Oberseite des auslaufseitigen Vorsprungs ausgebildet sind. Dies ergibt eine symmetrische Anordnung der formschlüssigen Halterungen.

In einer noch weiteren Ausführung sind die in dem Winkel schräg ausgebildeten Unterseiten der Nasen und die jeweils zugehörigen Oberseiten der Vorsprünge derart angeordnet, dass sie zu der Bremsscheibendrehachse hin geneigt sind. Dies ergibt eine kompakte Bauweise.

In einer Ausführung liegt der Wert des Winkels in einem Bereich von 10°...20°, vorzugsweise 12°...17°. Somit kann eine Selbsthemmung bzw. die Haftreibung hinsichtlich der Relativbewegung zwischen Nase und Vorsprung beeinflusst werden.

In bevorzugter Ausführung weist die Scheibenbremse weiterhin einen am Bremssattel lösbar befestigten Belaghaltebügel auf, von welchem der rückenseitige Bremsbelag federbelastet in dem Bremsträger gehalten ist. Dabei ist besonders bevorzugt vorgesehen, dass der zuspannseitige Bremsbelag mit seiner Belagträgerplatte mit einer zuspannseitigen Belaghaltefeder verbunden ist, welche an dem Belaghaltebügel und dem zuspannseitigen Bremsbelag derart angebracht ist, dass die zuspannseitige Belaghaltefeder eine Zugkraft auf den zuspannseitigen Bremsbelag ausübt und die Vorspannkraft erzeugt. Damit werden zusätzliche Bauteile zur Erzeugen der Vorspannkraft eingespart.

Hierbei ist vorgesehen, dass sich der Belaghaltebügel zwischen einer Unterseite der zuspannseitigen Belaghaltefeder und einer Oberseite der zuspannseitigen Belagträgerplatte erstreckt, wobei die zuspannseitige Belaghaltefeder auf einer Oberseite des Belaghaltebügels aufliegt. Dies ergibt eine einfache Montage und einen kompakten Aufbau.

Die zuspannseitige Belaghaltefeder zieht den zuspannseitigen Bremsbelag gegen die formschlüssige Halterung im Bremsträger und kann auch Schwingungsauslenkungen des Bremssattels in radialer Richtung von der Bremsscheibendrehachse weg weisend dämpfen.

Die rückenseitige Belaghaltefeder kann Schwingungen des Bremssattels weiterhin zur Achsmitte abdämpfen.

In einer alternativen Ausführung ist die zuspannseitige Belaghaltefeder an einer Unterseite des Belaghaltebügels angebracht. Auch kann vorteilhaft einfach eine Zugkraft zur Erzeugung der Vorspannkraft durch die zuspannseitige Belaghaltefeder erzeugt werden.

Ein Bremsbelagsatz für die oben beschriebene Scheibenbremse umfasst die beiden Bremsbeläge auf der jeweiligen Belagträgerplatte, zugehörige Belaghaltefedern und den Belaghaltebügel. Dies ergibt eine vorteilhaft einfache und schnelle Montage bei Wartung und Reparatur.

In den Zeichnungen sind Ausführungsbeispiele einer erfindungsgemäßen Scheibenbremse und eines erfindungsgemäßen Bremsbelagsatzes dargestellt und werden im Folgenden näher beschrieben, wobei auch weitere Vorteile erfindungsgemäßer Ausführungen erläutert werden. Es zeigen:

Fig. 1      eine schematische Teilschnittansicht eines Ausführungsbeispiels einer erfindungsgemäßen Scheibenbremse mit einer Schrägverschleißkompensationseinrichtung;

Fig. 2 bis 4      schematische Teilansichten der erfindungsgemäßen Scheibenbremse;

Fig. 5      eine schematische vergrößerte Ansicht eines Abschnitts einer Bremsbelaghalterung; und

Fig. 6      eine schematische Perspektivansicht einer Variante des Ausführungsbeispiels der erfindungsgemäßen Scheibenbremse.

Begriffe wie "oben", "unten", "rechts", "links" usw. beziehen sich auf Ausrichtungen und Anordnungen in den Figuren. Koordinaten x, y, z in den Figuren dienen der weiteren Orientierung.

Fig. 1 zeigt eine schematische Teilschnittansicht eines Ausführungsbeispiels einer erfindungsgemäßen Scheibenbremse 1, beispielsweise eine pneumatische Scheibenbremse 1, mit einer Schrägverschleißkompensationseinrichtung.

Die Scheibenbremse 1 ist z.B. Bestandteil der Bremsanlage eines Fahrzeugs, insbesondere eines Nutzfahrzeugs, und umfasst eine Bremsscheibe 2 mit einer hier in y-Richtung verlaufenden Bremsscheibendrehachse 2a, zwei Bremsbeläge 3 und 4, die jeweils auf einer Belagträgerplatte 3a, 4a aufgebracht sind, einen Bremsträger 5, einen Bremssattel 6 und eine Zuspannvorrichtung 9.

Die Bremsbeläge 3 und 4 sind mit ihren Belagträgerplatten 3a, 4a in dem Bremsträger 5 jeweils in einem Belagschacht 10, 10a zwischen jeweils zwei Bremsträgerhörnern 11, 11'; 12, 12' aufgenommen und durch einen Belaghaltebügel 15 in dem Bremsträger 5 gehalten. Die Bremsbeläge 3 und 4 sind in den Belagschächten 10, 10a in Richtung der Bremsscheibendrehachse 2a verschiebbar geführt.

Es wird hier angenommen, dass sich die Bremsscheibe 2 bei Vorwärtsfahrt des zugeordneten Fahrzeugs um ihre Bremsscheibendrehachse 2a so dreht, dass sich das zugeordnete Fahrzeug in positiver x-Richtung bewegt. Damit wird die in Fig. 1 unten liegende Seite des Bremssattels 6 als Einlaufseite EL und die oben gegenüber liegende Seite des Bremssattels 6 als Auslaufseite AL bezeichnet.

Gleiche Bauteile und Baugruppen werden nachfolgend hinsichtlich ihrer Zuordnung zu der Einlaufseite EL und zu der Auslaufseite AL dadurch unterschieden, dass die Bezugszeichen der Bauteile und Baugruppen, welche der Auslaufseite zugeordnet sind, mit einem Apostroph versehen sind.

Entsprechend werden die Bremsträgerhörner 11, 12 als einlaufseitige Bremsträgerhörner 11, 12 und die gegenüber liegenden Bremsträgerhörner 11', 12' als auslaufseitige Bremsträgerhörner 11', 12' bezeichnet.

Der Bremssattel 6 ist hier als Schiebesattel ausgebildet und weist einen Zuspannabschnitt 6a und einen Rückenabschnitt 6b, der auch als Reaktionsabschnitt bezeichnet wird, auf. Der Zuspannabschnitt 6a und der Rückenabschnitt 6b sind an beiden Enden über Verbindungsabschnitte 6c, 6'c in y-Richtung miteinander verbunden sind. Dabei sind der Zuspannabschnitt 6a und der Rückenabschnitt 6b jeweils auf einer Seite der Bremsscheibe 2 parallel zu dieser angeordnet, wobei sich die Verbindungsabschnitte 6c, 6'c in y-Richtung parallel zur Bremsscheibendrehachse 2a erstrecken. Der Zuspannabschnitt 6a und der Rückenabschnitt 6b bilden zusammen mit den Verbindungsabschnitten 6c, 6'c eine Öffnung über der Bremsscheibe 2 mit den Bremsbelägen 3 und 4 zum Zugriff auf diese bei Montage, Wechsel und Wartungsarbeiten.

Der Bremssattel 6 ist über Lager 7, 8 an dem ortsfest fixierten Bremsträger 5 in Richtung der Bremsscheibendrehachse 2a verschiebbar geführt gehalten. Die Lager 7, 8 werden hier nicht weiter erläutert.

Der Zuspannabschnitt 6a des Bremssattels 6 nimmt die Zuspannvorrichtung 9 der Scheibenbremse 1 auf. Die Zuspannvorrichtung 9 dient zur Betätigung der Scheibenbremse 1 und kann z.B. einen Bremsdrehhebel mit einem Druckluftzylinder aufweisen. Die hier gezeigte beispielhafte Zuspannvorrichtung 9 ist eine so genannte zweistempelige Zuspannvorrichtung 9 mit jeweils einem Stempel 9a, 9'a. Jeder Stempel 9a, 9'a steht jeweils über ein Druckstück 9b, 9'b mit einer Rückseite 3b der zuspannseitigen Belagträgerplatte 3a in Kontakt. Die Zuspannvorrichtung 9 wird hier nicht weiter erläutert.

Die Seite der Scheibenbremse 1, auf welcher der Zuspannabschnitt 6a des Bremssattels 6 mit der Zuspannvorrichtung 9 angeordnet ist, wird im Weiteren als Zuspannseite ZS bezeichnet. Die andere Seite der Scheibenbremse 1, auf welcher der Rückenabschnitt 6b des Bremssattels 6 angeordnet ist, wird als Rückenseite RS, die auch Reaktionsseite genannt wird, im Folgenden bezeichnet. Diese Begriffe "Zuspannseite" und "Rückenseite" und weitere sich darauf beziehende Bezeichnungen sind üblich und dienen zu einer besseren Orientierung.

So wird der Bremsbelag 3 mit der Belagträgerplatte 3a, der sich auf der Zuspannseite ZS befindet, als zuspannseitiger Bremsbelag 3 bezeichnet, und der diesem gegenüberliegende wird rückenseitiger Bremsbelag 4 mit der Belagträgerplatte 4a genannt.

Der zuspannseitige Bremsbelag 3 wird von der Zuspannvorrichtung 9 bei Bremsvorgängen mit einer Zuspannkraft in y-Richtung beaufschlagt. Der rückenseitige Bremsbelag 4 ist im Rückenabschnitt 6b des Bremssattels 6 aufgenommen und weist bei dieser Scheibenbremse 1 mit dem Bremssattel 6 in Schiebesattelausführung keine Relativbewegungen zum Rückenabschnitt 6b auf. Eine Rückseite 4b der rückenseitigen Belagträgerplatte 4a steht mit dem Rückenabschnitt 6b des Bremssattels 6 in Kontakt.

Bei Scheibenbremsen kann es konstruktionsbedingt zu einem ungleichmäßigen Verschleiß der Bremsbeläge 3, 4 kommen. Die Bremsbeläge 3, 4 können bezogen auf die Ebene der jeweiligen Belagträgerplatte 3a, 4a einerseits in radialer Richtung (z-Richtung), als auch in Umfangsrichtung nicht parallel verschleißen. Diese Verschleißarten werden als Radial- bzw. Tangentialverschleiß benannt. Zur Kompensation eines solchen Schrägverschleißes dient die Schrägverschleißkompensationseinrichtung, die nachfolgend im Detail beschrieben wird.

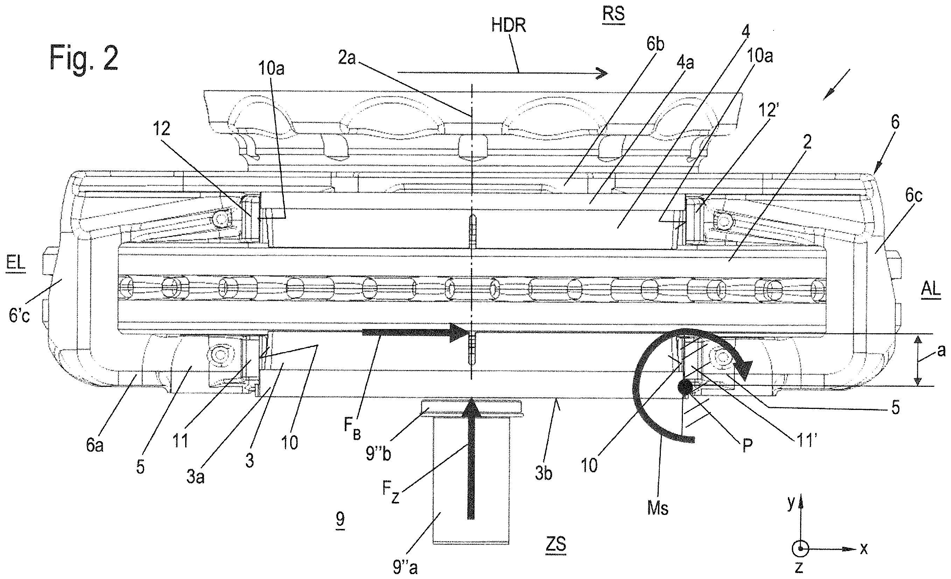

Hierzu zeigen die Figuren 2 bis 4 schematische Teilansichten der erfindungsgemäßen Scheibenbremse 1.

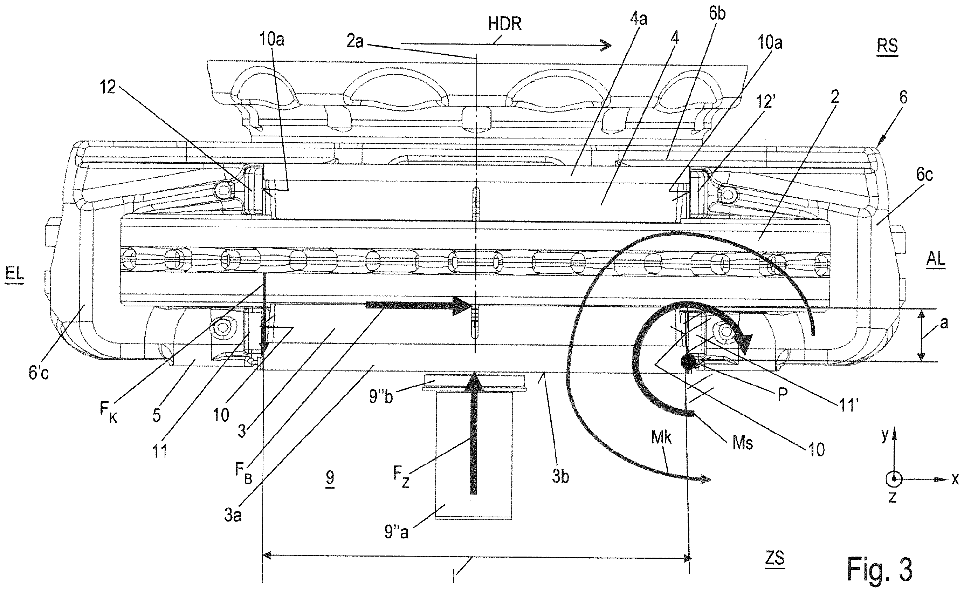

In Fig. 2 und 3 ist jeweils eine Draufsicht der Scheibenbremse 1 dargestellt. Die Scheibenbremse 1 ist hier als eine einstempelige Scheibenbremse 1 ausgeführt. Die Zuspannvorrichtung 9 weist daher nur einen Stempel 9"a mit einem zugehörigen Druckstück 9"b auf.

Der oben angegeben Schrägverschleiß kann besonders bei solchen einstempeligen Scheibenbremsen auftreten.

Eine Zuspannkraft Fz wird von der Zuspannvorrichtung 9 erzeugt und durch den Stempel 9"a über das Druckstück 9"b, welches mit der Rückseite 3b der Belagträgerplatte 3a des zuspannseitigen Bremsbelags 3 in Kontakt steht, auf den zuspannseitigen Bremsbelag 3 eingeleitet. Die Bremsscheibe 2 dreht sich in einer Hauptdrehrichtung HDR. Die eingeleitete Zuspannkraft $F_Z$ erzeugt bei sich drehender Bremsscheibe 2 eine Bremskraft $F_B$ nach folgender Gesetzmäßigkeit:

$$F_B = \mu_B * F_Z \qquad\qquad (1)$$

Hierbei ist $\mu_B$ der Reibbeiwert zwischen der Bremsscheibe 2 und dem Reibmaterial des zuspannseitigen Bremsbelags 3.

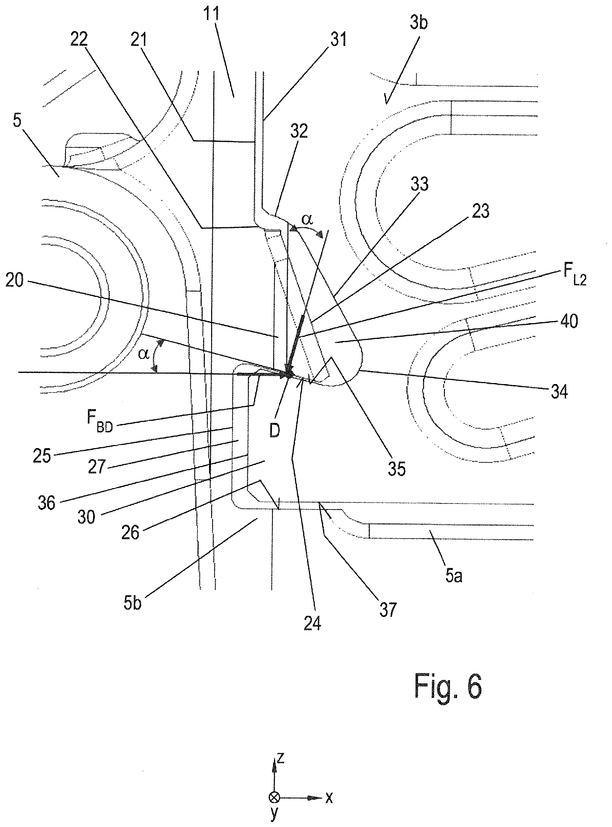

Die Bremskraft $F_B$ verläuft tangential zur Bremsscheibe 2, wobei eine Wirkungslinie der Bremskraft $F_B$ parallel zu Flächen von Stützabschnitten 26 (siehe Fig. 6) von als Tragabschnitten 5b, 5'b ausgebildeten Endabschnitten eines Brückenabschnitts 5a des Bremsträgers 5 verläuft. Diese Stützabschnitte 26 bilden eine untere Auflage des zuspannseitigen Belagschachts 10.

Die Bremskraft $F_B$ wird an dem Bremsträger 5 in einem Punkt P abgestützt. Dieser Punkt P befindet sich an der Innenseite des Belagschachtes 10 des auslaufseitigen Bremsträgerhorns 11'. Hier liegt der zuspannseitige Bremsbelag 3 mit seiner Belagträgerplatte 3a an dem auslaufseitigen Bremsträgerhorn 11' an.

Der Punkt P liegt in negativer y-Richtung in einem Abstand, der hier als Hebellänge a bezeichnet ist, von der Wirkungslinie der Bremskraft $F_B$ versetzt. Durch diesen Versatz der Wirkungslinie der Bremskraft $F_B$ zu dem Abstützpunkt P entsteht ein Moment Ms, das sich wie folgt ergibt:

$$M_S = F_B * a \qquad\qquad (2)$$

Dieses Moment Ms führt nun zu einer ungleichmäßigen Kraftverteilung an der Belagfläche des zuspannseitigen Bremsbelags 3. Diese ungleichmäßige Kraftverteilung überlagert sich der Zuspannkraft Fz und führt zu einem Tangentialverschleiß an der einlaufseitigen Belagseite des zuspannseitigen Bremsbelags 3.

Um zumindest eine Kompensation des Momentes Ms zu einem bestimmten Teil zu erreichen, wird nun ein entgegengesetztes Kompensationsmoment $M_K$ erzeugt. Hierzu wird Fig. 3 betrachtet.

Das Kompensationsmoment $M_K$ entsteht durch die Erzeugung einer Kompensationskraft $F_K$ an der einlaufenden Seite des Bremsbelags 3. Mit einem Hebelarm I, weleher einem Abstand zwischen den beiden Innenseiten des Belagschachtes 10 entspricht, ergibt sich das Kompensationsmoment $M_K$ zu

$$M_K = F_K * I \qquad\qquad (3)$$

Eine vollständige Kompensation des Momentes Ms ist gegeben, wenn die folgende Bedingung gilt:

$$M_K = M_S \qquad\qquad (4)$$

$$F_K * l = F_B * a \qquad\qquad (4a)$$

Die Kompensationskraft $F_K$ entsteht beispielsweise wie der US 8,540,061 B1 entnommen werden kann.

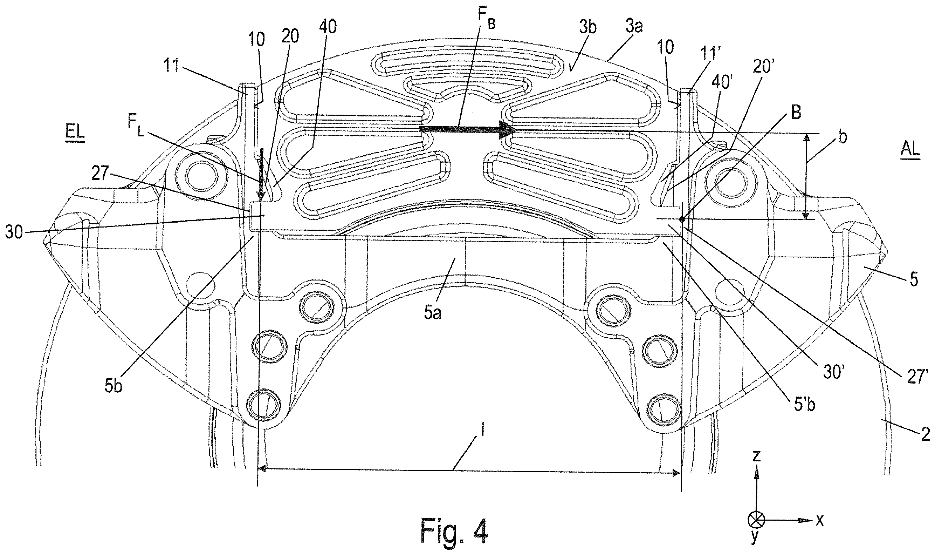

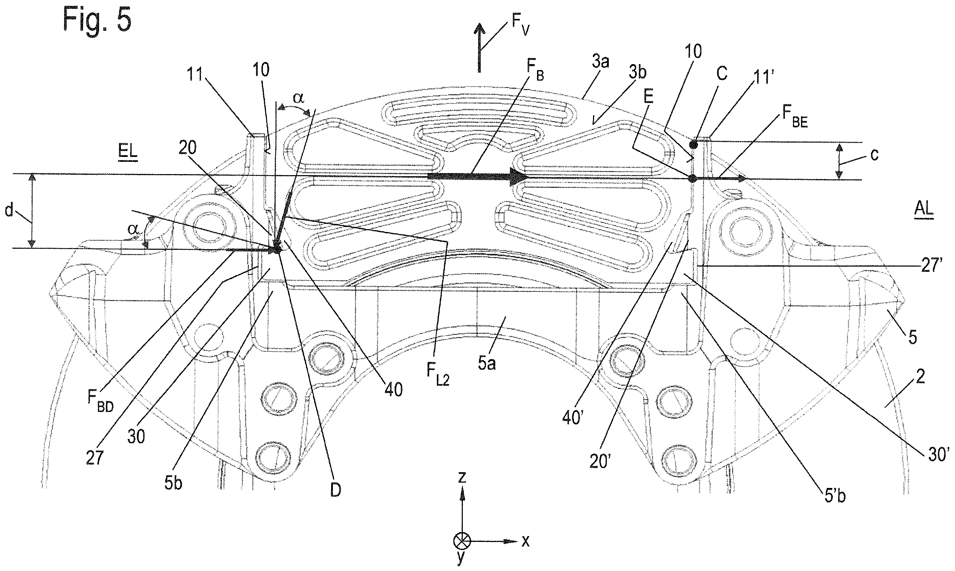

Fig. 4 und 5 zeigen jeweils eine Ansicht der Rückseite 3b der Belagträgerplatte 3a des zuspannseitigen Bremsbelags 3 in dem zuspannseitigen Belagschacht 10 von der Zuspannseite her gesehen. In Fig. 6 ist eine schematische vergrößerte Ansicht eines Abschnitts der Bremsbelaghalterung dargestellt.

Der Bremsträger 5 weist einen Brückenabschnitt 5a auf, welcher das einlaufseitige Bremsträgerhorn 11 und das auslaufseitige Bremsträgerhorn 11' verbindet und in x-Richtung verläuft. Das einlaufseitige Bremsträgerhorn 12 und das auslaufseitige Bremsträgerhorn 12' auf der Rückenseite RS sind in gleicher Weise mit einem weiteren Brückenabschnitt des Bremsträgers 5 verbunden, welcher hier nicht gezeigt, aber leicht vorstellbar ist.

Das einlaufseitige Bremsträgerhorn 11 und das auslaufseitige Bremsträgerhorn 11' bilden mit ihren Innenseiten und mit als Tragabschnitten 5b, 5'b ausgebildeten Endabschnitten des Brückenabschnitts 5a den zuspannseitigen Belagschacht 10.

An der Innenseite des einlaufseitigen Bremsträgerhorns 11 ist in seiner unteren Hälfte eine einlaufseitige Nase 20 angeformt, welche von dem einlaufseitigen Bremsträgerhorn 11 in den Belagschacht 10 hervorsteht. Unterhalb der Nase 20 ist ein Hinterschnitt 27 angeordnet, welcher sich zwischen einer Unterseite 24 der Nase 20 und dem einlaufseitigen Tragabschnitt 5b des Bremsträgers 5 befindet.

Diese Anordnung ist an dem auslaufseitigen Bremsträgerhorn 11' gespiegelt ebenfalls vorhanden. Dabei steht eine auslaufseitige Nase 20' ebenfalls in den Belagschacht 10 hervor. Unter der auslaufseitigen Nase 20' ist auch der Hinterschnitt 27' angeordnet.

Jede Seite der zuspannseitigen Belagträgerplatte 3a ist so ausgebildet, dass sie mit dem Profil einer zugehörigen Innenseite eines Bremstägerhorns 11, 11' kommuniziert. Der zuspannseitige Bremsbelag 3 ist so mit seiner Belagträgerplatte 3a in y-Richtung in den Belagschacht 10 eingesetzt, dass die Vorsprünge 30, 30' in den Hinterschnitten 27, 27' der Bremsträgerhörner 11, 11' aufgenommen und die Nasen 20, 20' in Ausnehmungen 40 der Belagträgerplatte 3a angeordnet sind.

Die Nasen 20, 20' der Bremsträgerhörner 11, 11' und die Vorsprünge 30, 30' der zuspannseitigen Belagträgerplatte 3a des zuspannseitigen Bremsbelags 3 bilden jeweils eine formschlüssige Halterung des zuspannseitigen Bremsbelags 3 in dem Belagschacht 10.

Das Profil der Innenseite des einlaufseitigen Bremsträgerhorns 11 und das Profil der zugehörigen Außenseite der zuspannseitigen Belagträgerplatte 3a sind in Fig. 6 vergrößert dargestellt.

Die Innenseite des einlaufseitigen Bremsträgerhorns 11 verläuft von einem oberen Ende zunächst über etwa die halbe Länge in einem gerade Wandabschnitt 21 in negativer z-Richtung und geht dann mit einem Übergangsabschnitt 22 in die Nase 20 über. Die Nase 20 steht in den Belagschacht 10 hervor und weist einen geradlinigen, schrägen Nasenabschnitt 23 auf, welcher sich schräg nach unten erstreckt. An dem unteren Ende des Nasenabschnitts 23 ist schräg nach außen und nach oben verlaufender, gerader Abschnitt als Unterseite 24 der Nase 20 angeordnet. Diese Unterseite 24 verläuft zu der Wirkungslinie der Bremskraft $F_B$ in einem Winkel $\alpha$ (siehe Fig. 5) und geht an ihrem hinteren Ende in dem einlaufseitigen Bremsträgerhorn 11 über eine Rundung in einen geraden in negativer z-Richtung verlaufenden Wandabschnitt 25 über. Die Fläche des Wandabschnitts 25 verläuft wie die Fläche des oberen Wandabschnitts 21 in einer y-z-Ebene, wobei die Fläche des unteren Wandabschnitts 25 in negativer x-Richtung zu der Fläche des oberen Wandabschnitts 21 versetzt angeordnet ist. Der untere Wandabschnitt 25 geht an seinem unteren Ende über eine Rundung in einen Stützabschnitt 26 über, welcher auf dem Tragabschnitt 5b des Bremsträgers 5 angeordnet ist. Der Stützabschnitt 26 liegt in einer x-y-Ebene.

Der Unterschnitt 27 umfasst die Unterseite 24 der Nase 20 und den unteren Wandabschnitt 25.

Die mit diesem Profil im Wesentlichen korrespondierende Außenseite der zuspannseitigen Belagträgerplatte 3a des zuspannseitigen Bremsbelags 3 beginnt mit einem geraden Anlageabschnitt 31, der sich in negativer z-Richtung erstreckt und dann mit einem Übergangsabschnitt 32 in eine schräg nach unten und in Richtung auf die Mitte der zuspannseitigen Belagträgerplatte 3a verlaufende Ausnehmungsabschnitt 33 einer Ausnehmung 40 übergeht. Das untere Ende des Ausnehmungsabschnitts 33 ist mit einem gerundeten Übergangsabschnitt 34 verbunden, dessen unteres Ende in einen geraden Abschnitt mit einer Oberseite 35 übergeht. Dieser gerade Abschnitt verläuft in dem gleichen Winkel $\alpha$ nach außen und nach oben wie die Unterseite 24 der Nase 20 und geht an seinem oberen Ende in einen in negativer z-Richtung nach unten verlaufenden Vorsprungsabschnitt 36 über. Das untere Ende des Vorsprungsabschnitts 36 geht in einem rechten Winkel zur Mitte der (in positiver x-Richtung) Belagträgerplatte 3a hin weisend in einen geradlinigen Stützabschnitt 37 über, wobei der Übergang eine Fase aufweist. Der Stützabschnitt 37 korrespondiert mit dem Stützabschnitt 26 des Tragabschnitts 5b.

Auf diese Weise sind die in dem Winkel α schräg ausgebildeten Unterseiten 24 der Nasen 20, 20' und die jeweils zugehörigen Oberseiten 35 der Vorsprünge 30, 30' derart angeordnet, dass sie zu der Bremsscheibendrehachse 2a hin geneigt sind.

Die Oberseite 35, der Vorsprungsabschnitt 36 und der Stützabschnitt 37 umgeben den einlaufseitigen Vorsprung 30 der zuspannseitigen Belagträgerplatte 3a.

Die Nase 20 ist in der Ausnehmung 40 der Belagträgerplatte 3a aufgenommen.

Die Oberseite 35 des Vorsprungs 30 und die Unterseite 24 der Nase 30 berühren sich in dem Kontaktpunkt D.

Die Profilanordnung gilt auch spiegelbildlich für die Auslaufseite, was hier nicht beschrieben wird, aber verständlich ist.

In dieser Anordnung, nämlich bei dem so in den zuspannseitigen Belagschacht 10 eingesetzten zuspannseitigen Bremsbelag, wird die Kompensationskraft $F_K$ durch eine Kraft $F_L$ erzeugt, welche den einlaufseitigen Vorsprung 30 der zuspannseitigen Belagträgerplatte 3a in z-Richtung gegen die einlaufseitige Nase 20 des einlaufseitigen Bremsträgerhorns 11 drückt.

Die Kompensationskraft $F_K$ ergibt sich durch die Kraft $F_L$ nach dem folgenden Zusammenhang

$$F_K = \mu * F_L \qquad\qquad (5)$$

Dabei ist μ der Reibbeiwert zwischen dem Vorsprung 30 der zuspannseitigen Belagträgerplatte 3a und der Nase 20 des einlaufseitigen Bremsträgerhorns 11.

Die Kraft $F_L$ ist dabei abhängig von einer Abstützlänge, die in etwa dem Hebelarm I entspricht, und einem Abstand b eines Druck- bzw. Kontaktpunktes B am auslaufseitigen Bremsträgerhorn 11'. Der Druckpunkt B liegt in dem Abstand b bzw. der Hebellänge b zwischen der Wirkungslinie der Bremskraft $F_B$ und einer Kontaktstelle zwischen dem auslaufseitigen Vorsprung 30' der zuspannseitigen Belagträgerplatte 3a und dem auslaufseitigen Bremsträgerhorn 11'. Die Vorsprünge 30 und 30' werden unten im Zusammenhang mit den Nasen 20, 20' noch ausführlich erläutert.

Für die erzielbare Kraft $F_L$ gilt hier folgende Bedingung:

$$F_L * I = F_B * b \qquad\qquad (6)$$

Die erzielbare Kompensationskraft $F_K$ ist somit proportional zur Hebellänge b des Kontaktpunktes B vom Zentrum der Bremskraft $F_B$. Die Hebellänge b lässt sich aber nicht beliebig steigern, wodurch die erzielbare Kraft $F_L$ begrenzt wird.

In Fig. 5 ist die Halterung bzw. Anordnung des zuspannseitigen Bremsbelags 3 in dem zuspannseitigen Belagschacht 10 der erfindungsgemäßen Schrägverschleißkompensationseinrichtung dargestellt. Die Schrägverschleißkompensationseinrichtung umfasst die Halterung des zuspannseitigen Bremsbelags 3 in dem Belagschacht 10 zwischen dem einlaufseitigen Bremsträgerhorn 11 und dem auslaufseitigen Bremsträgerhorn 11' mit den Nasen 20, 20', den Hinterschnitten 25, 25', den Vorsprüngen 30, 30' und einer Vorspannkraft Fv in positiver z-Richtung.

Die Nasen 20, 20' sind mit ihren Hinterschnitten 25, 25' so gestaltet, dass ihre Unterseiten 24 in einem Winkel α zu der Wirkungslinie der Bremskraft $F_B$ verlaufen. Der Wert des Winkels α liegt in einem Bereich von 10°...20°, vorzugsweise beträgt der Wert 15°.

Die Oberseiten 35 der Vorsprünge 30, 30' weisen den gleichen Winkel α auf

Der zuspannseitige Bremsbelag 3 liegt im nicht betätigten Zustand der Scheibenbremse 1 mit jedem Vorsprung 30, 30' jeweils einer Unterseite 24 der Nasen 20, 20' durch die entsprechende Vorspannkraft Fv an, so dass sich ein Kontakt der Unterseite der einlaufseitigen Nase 20 und der Oberseite 35 des einlaufseitigen Vorsprungs 30 in einem Kontaktpunkt D ergibt.

Eine Beaufschlagung des zuspannseitigen Bremsbelags 3 mit der Vorspannkraft Fv kann beispielsweise durch mindestens eine Feder erfolgen. Die Vorspannkraft Fv kann auf unterschiedliche Weise erzeugt werden, Beispiele dafür können der DE 10 2012 002 734 A1 entnommen werden. Eine weitere Erzeugung der Vorspannkraft Fv wird weiter unten noch näher beschrieben.

Der zuspannseitige Bremsbelag 3 ist somit federbelastet, wobei die so erzeugte Vorspannkraft Fv den zuspannseitigen Bremsbelag 3 von dem Brückenabschnitt 5a des Bremsträgers 5 weg in radialer Richtung in Bezug auf die Bremsscheibendrehachse 2a gegen die formschlüssige Halterung der Bremsträgerhörner 11, 11' drückt.

Wird in dieser vorgespannten Anordnung des zuspannseitigen Bremsbelags 3 eine Bremskraft $F_B$ wie oben beschrieben eingeleitet, stützt sich der zuspannseitige Bremsbelag 3 über den einlaufseitigen Vorsprung 30 seiner Belagträgerplatte 3a an dem Hinterschnitt 25 in dem Kontaktpunkt D an der einlaufseitigen Nase 20 des einlaufseitigen Bremsträgerhorns 11 des Bremsträgers 5 ab und erzeugt eine Kraft $F_{L2}$.

Durch eine Drehbewegung um den Kontaktpunkt D mit einem Hebelarm d kommt die zuspannseitige Belagträgerplatte 3a mit dem Bremsbelag 3 auch an dem auslaufseitigen Bremsträgerhorn 11' an dessen Innenseite in einem oberen Bereich zu einer Punktberührung in einem Berührpunkt C im äußeren Bereich. Der Hebelarm d ist der Abstand des Kontaktpunktes D rechtwinklig zu der Wirkungslinie der Bremskraft $F_B$.

Nun entsteht ein Drehmoment um den Berührpunkt C mit einem Hebelarm c, der rechtwinklig zu der Wirkungslinie der Bremskraft $F_B$ liegt und durch den Berührpunkt C verläuft. Dieses Drehmoment bringt die Seite der zuspannseitigen Belagträgerplatte 3a des zuspannseitigen Bremsbelags 3 vollflächig an der Innenseite des auslaufseitigen Bremsträgerhorns 11' zur Anlage.

Die Kraft steigert sich dabei im Kontaktpunkt D, bis die Oberseite 35 des einlaufseitigen Vorsprungs 30 der zuspannseitigen Belagträgerplatte 3a die Haftreibung mit der Unterseite 24 der einlaufseitigen Nase 20 am einlaufseitigen Bremsträgerhorn 11 überschritten hat und entlang der im Winkel $\alpha$ schräg verlaufenden Unterseite 24 der Nase 20 rutscht. Dadurch wird eine Überlastung verhindert. Der zuspannseitige Bremsbelag 3 kann sich daher mit seiner Belagträgerplatte 3a durch seine Bewegung nicht im Belagschacht 10, z.B. durch Korrosion, festsetzen.

Die Bremskraft FB teilt sich nun in zwei Teilkräfte FBE und FBD auf, die als Resultierenden in den Punkten D und E wirken. Dabei liegt der Punkt E in dem Schnittpunkt der Wirkungslinie der Bremskraft FB und der Innenseite des auslaufseitigen Bremsträgerhorns 11'.

$$F_B = F_{BE} + F_{BD} \qquad (7)$$

Die Kraft $F_{L2}$ ist nun unabhängig von Hebelverhältnissen und ist proportional zu der Bremskraft $F_B$.

$$F_{L2} = F_{BD} / \sin \alpha \qquad (7)$$

Ergebnisse von umfangreichen Berechnungen haben gezeigt, dass sich eine verbesserte gleichmäßigere Flächenpressung für den zuspannseitigen Bremsbelag 3 aufgrund der Ausbildung der Nase 20 ermöglichen lässt. Die im Winkel $\alpha$ schräg verlaufende Unterseite der einlaufseitigen Nase 20 mit dem Hinterschnitt 25 ist dabei eine Maßnahme, welche diesen Effekt der gleichmäßigeren Flächenpressung zusätzlich steigert.

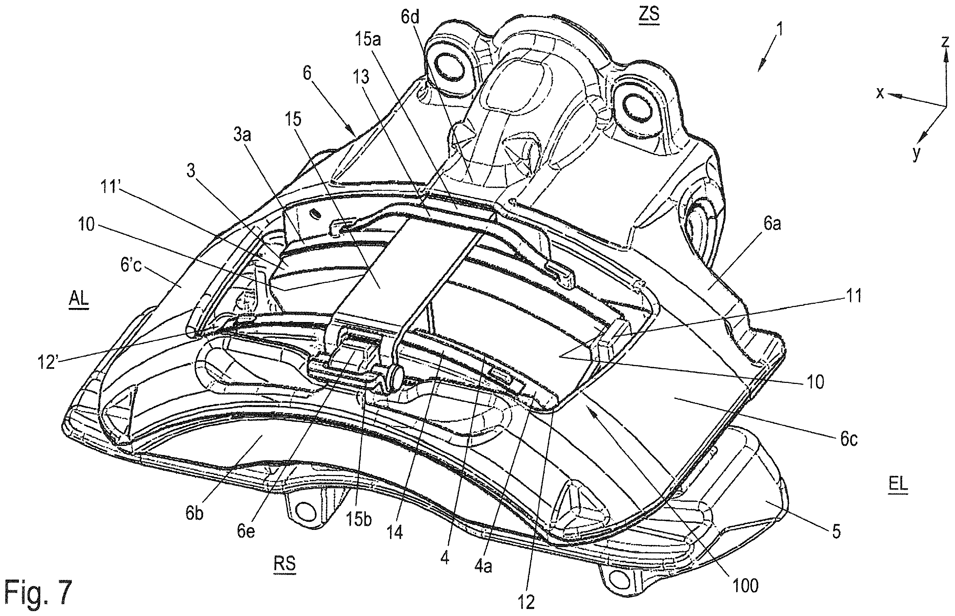

Schließlich zeigt Fig. 7 eine schematische Perspektivansicht einer Variante des Ausführungsbeispiels der erfindungsgemäßen Scheibenbremse 1.

Die Bremsscheibe 2 ist der Übersichtlichkeit halber nicht in Fig. 7 gezeigt, aber leicht vorstellbar.

Die Bremsbeläge 3 und 4 sind an den Oberseiten ihrer jeweiligen Belagrückenplatte 3a, 4a jeweils mit einer Belaghaltefeder 13, 14 versehen, welche jeweils an Federhaltern an der jeweiligen Belagrückenplatte 3a, 4a angelenkt sind. Die Belaghaltefedern 13, 14 wirken mit dem Belaghaltebügel 15 zusammen.

Der Belaghaltebügel 15 erstreckt sich in y-Richtung über der Öffnung, die von dem Zuspannabschnitt 6a, dem Rückenabschnitt 6b und dem Verbindungsabschnitten 6c über der Bremsscheibe 2 gebildet ist, und ist über den eingebauten Bremsbelägen 3, 4 derart angeordnet, dass er mit einem zuspannseitigen Endabschnitt 15a in einem Halteabschnitt 6d des Zuspannabschnitts 6a des Bremssattels 6 aufgenommen ist, wobei ein gegenüberliegender Endabschnitt 15b des Belaghaltebügels 15 mit einem Halteabschnitt 6e des Rückenabschnitts 6b des Bremssattels 6 verbunden ist. Dieser rückenseitige Endabschnitt 15a des Belaghaltebügels 15 ist mit einem Sicherungselement, z.B. ein Bolzen, in seiner Lage gesichert.

In diesem Ausführungsbeispiel ist der Belaghaltebügel 15 derart über den Bremsbelägen 3, 4, angeordnet, dass sich der Belaghaltebügel 15 zwischen einer Unterseite der zuspannseitigen Belaghaltefeder 13 des zuspannseitigen Bremsbelags 3 und einer Oberseite der zuspannseitigen Belagrückenplatte 3a hindurch erstreckt. Mit anderen Worten, die zuspannseitige Belaghaltefeder 13 liegt auf einer Oberseite des Belaghaltebügels 15 auf. Dabei übt die Belaghaltefeder 13 eine Zugkraft in z-Richtung radial zur Bremsscheibendrehachse 2a auf die zuspannseitige Belagrückenplatte 3a und auf den zuspannseitigen Bremsbelag 3 aus. Dazu sind die Federhalter in entsprechender Weise (nicht gezeigt, aber leicht vorstellbar) ausgebildet. Diese von der zuspannseitigen Belaghaltefeder 13 erzeugte Zugkraft bildet die oben beschriebene Vorspannkraft Fv.

Im Bereich des rückenseitigen Bremsbelags 4 steht der Belaghaltebügel 15 mit einer Unterseite mit der rückenseitigen Belaghaltefeder 14 der rückenseitigen Belagrückenplatte 4a in Kontakt. Dabei übt der Belaghaltebügel 15 eine Druckkraft auf die rückenseitige Belaghaltefeder 14 aus, die auf die rückenseitige Belagrückenplatte 4a und den rückenseitigen Bremsbelag 4 übertragen wird. Der rückenseitige Bremsbelag 4 leitet diese Druckkraft, welche in radialer Richtung, d.h. in negativer z-Richtung, zur Bremsscheibendrehachse 2a verläuft, über den rückenseitigen Belagrückenplatte 4a in den Bremsträger 5 ein.

Mit dem Bezugszeichen 100 ist ein Bremsbelagsatz bezeichnet, welcher die beiden Bremsbeläge 3, 4 auf der jeweiligen Belagträgerplatte 3a, 4a, die zugehörigen Belaghaltefedern 13, 14, und den Belaghaltebügel 15 umfasst.

Der Bremsbelagsatz 100 kann in allen Scheibenbremsen 1 mit Schiebesattel, insbesondere für Nutzfahrzeuge, eingesetzt werden.

Durch die oben beschriebenen Ausführungsbeispiele wird die Erfindung nicht eingeschränkt, sondern sie ist im Rahmen der beigefügten Ansprüche modifizierbar.

So ist es zum Beispiel denkbar, dass die zuspannseitige Belaghaltefeder 13 an der Unterseite des Belaghaltebügels 15 in geeigneter Weise derart befestigt ist, dass sie die Vorspannkraft Fv für den zuspannseitigen Bremsbelag 3 erzeugt.

Bezugszeichenliste

| | |
|---|---|
| 1 | Scheibenbremse |
| 2 | Bremsscheibe |
| 2a | Bremsscheibendrehachse |
| 3,4 | Bremsbelag |
| 3a, 4a | Belagträgerplatte |
| 3b, 4b | Rückseite |
| 5 | Bremsträger |
| 5a | Brückenabschnitt |
| 5b, 5b' | Tragabschnitt |
| 6 | Bremssattel |
| 6a | Zuspannabschnitt |
| 6b | Rückenabschnitt |
| 6c | Verbindungsabschnitt |
| 6d, 6e | Halteabschnitt |
| 7,8 | Lager |
| 9 | Zuspannvorrichtung |
| 9a, 9'a, 9"a | Stempel |
| 9b, 9'b, 9"b | Druckstück |
| 10, 10a | Belagschacht |
| 11, 11'; 12, 12' | Bremsträgerhorn |
| 13, 14 | Belaghaltefeder |
| 15 | Belaghaltebügel |
| 15a, 15b | Endabschnitt |
| 20, 20' | Nase |
| 21 | Wandabschnitt |
| 22 | Übergangsabschnitt |
| 23 | Nasenabschnitt |
| 24 | Unterseite |
| 25, 25' | Wandabschnitt |
| 26 | Stützabschnitt |
| 27 | Hinterschnitt |
| 30, 30' | Vorsprung |
| 31 | Anlageabschnitt |
| 32, 34 | Übergangsabschnitt |
| 33 | Ausnehmungsabschnitt |
| 35 | Oberseite |
| 36 | Vorsprungabschnitt |
| 37 | Stützabschnitt |
| 40, 40' | Ausnehmung |
| 100 | Bremsbelagsatz |
| $\alpha$ | Winkel |
| a, b, c, d, I | Hebellänge |
| AL | Auslaufseite |
| B, C, D, E, P | Punkt |
| EL | Einlaufseite |
| $F_B$, $F_{BD}$, $F_{BE}$, $F_K$, $F_L$, $F_{L2}$, $F_V$, $F_Z$ | Kraft |
| HDR | Hauptdrehrichtung |

| $M_K$, Ms, | Moment |
|---|---|
| RS | Rückenseite |
| ZS | Zuspannseite |
| x, y, z | Koordinaten |

## Patentansprüche

1. Scheibenbremse (1) für ein Fahrzeug, insbesondere für ein Nutzfahrzeug, aufweisend eine Bremsscheibe (2) mit einer Bremsscheibendrehachse (2a), mindestens einen zuspannseitigen und einen rückenseitigen Bremsbelag (3, 4) mit einer jeweiligen Belagträgerplatte (3a, 4a), einen Bremsträger (5), der die mindestens zwei Bremsbeläge (3, 4) in einem jeweiligen Belagschacht (10, 10a) zwischen einem einlaufseitigen und einem auslaufseitigen Bremsträgerhorn (11, 11'; 12, 12') und einem Brückenabschnitt (5a) aufnimmt, wobei einer der mindestens zwei Bremsbeläge (3, 4) in dem zugehörigen Belagschacht (10, 10a) mit mindestens einem der Bremsträgerhörner (11, 11'; 12, 12') in formschlüssiger Halterung in radialer Richtung in Bezug auf die Bremsscheibendrehachse (2a) gehalten und federbelastet mit einer Vorspannkraft (Fv) beaufschlagt ist, welche den einen der mindestens zwei Bremsbeläge (3, 4) von dem Brückenabschnitt (5a) des Bremsträgers (5) weg in radialer Richtung in Bezug auf die Bremsscheibendrehachse (2a) gegen die formschlüssige Halterung des mindestens einen Bremsträgerhorns (11, 11'; 12, 12') drückt, und einen die Bremsscheibe (2) übergreifenden Bremssattel (6), wobei an dem einlaufseitigen Bremsträgerhorn (11) und an dem auslaufseitigen Bremsträgerhorn (11') jeweils eine formschlüssige Halterung mindestens des zuspannseitigen Bremsbelags (3) in dem Belagschacht (10) vorgesehen ist, wobei die formschlüssige Halterung mit Nasen (20, 20') mit Hinterschnitten (27, 27'), Vorsprüngen (30, 30') der Belagträgerplatte (3a) des zuspannseitigen Bremsbelags (3) und der Vorspannkraft (Fv) eine Schrägverschleißkompensationseinrichtung bildet,

   wobei die Scheibenbremse (1) weiterhin einen am Bremssattel (6) lösbar befestigten Belaghaltebügel (15) aufweist, von welchem der rückenseitige Bremsbelag (3) federbelastet in dem Bremsträger (5) gehalten ist, **dadurch gekennzeichnet, dass** der zuspannseitige Bremsbelag (3) mit seiner Belagträgerplatte (3a) mit einer zuspannseitigen Belaghaltefeder (13) verbunden ist, welche an dem Belaghaltebügel (15) und dem zuspannseitigen Bremsbelag (3) derart angebracht ist, dass die zuspannseitige Belaghaltefeder (13) eine Zugkraft auf den zuspannseitigen Bremsbelag (3) ausübt und die Vorspannkraft (Fv) erzeugt.

2. Scheibenbremse (1) nach Anspruch 1, **dadurch gekennzeichnet, dass** der zuspannseitige Bremsbelag (3) im nicht betätigten Zustand der Scheibenbremse (1) mit einer Oberseite (35) eines jeden Vorsprungs (30, 30') jeweils an einer Unterseite (24) einer jeden Nase (20, 20') durch die Vorspannkraft (Fv) beaufschlagt anliegt.

3. Scheibenbremse (1) nach Anspruch 2, **dadurch gekennzeichnet, dass** die Nasen (20, 20') der formschlüssigen Halterungen von jeweils einem der Bremsträgerhörner (11, 11') in den Belagschacht (10) hervorstehen.

4. Scheibenbremse (1) nach Anspruch 3, **dadurch gekennzeichnet, dass** die Vorsprünge (30, 30') der zuspannseitigen Belagträgerplatte (3a) des zuspannseitigen Bremsbelags (3) jeweils nach außen von einer jeweiligen Seite der zuspannseitigen Belagträgerplatte (3a) hervorstehen, wobei über ihnen Ausnehmungen (40, 40') zur Aufnahme der Nasen (20, 20') in die Belagträgerplatte (3a) jeweils von der Seite her eingeformt sind.

5. Scheibenbremse (1) nach Anspruch 4, **dadurch gekennzeichnet, dass** die Unterseite (24) einer jeden Nase (20, 20') und die jeweils zugehörige Oberseite (35) eines jeden Vorsprungs (30, 30') in einem Winkel ($\alpha$) schräg zu einer Wirkungslinie einer Bremskraft ($F_B$) verlaufen, wobei die Wirkungslinie der Bremskraft ($F_B$) parallel zu Flächen von Stützabschnitten (26) des Brückenabschnitts (5a) des Bremsträgers (5) verläuft, wobei diese Stützabschnitte (26) eine untere Auflage des zuspannseitigen Belagschachtes (10) bilden.

6. Scheibenbremse (1) nach Anspruch 5, **dadurch gekennzeichnet, dass** die einlaufseitige Nase (20) und die zugehörige Oberseite (35) des einlaufseitigen Vorsprungs (30) spiegelbildlich zu der auslaufseitigen Nase (20) und der zugehörige Oberseite des auslaufseitigen Vorsprungs (30') ausgebildet sind.

7. Scheibenbremse (1) nach Anspruch 6, **dadurch gekennzeichnet, dass** die in dem Winkel ($\alpha$) schräg ausgebildeten Unterseiten (24) der Nasen (20, 20') und die jeweils zugehörigen Oberseiten (35) der Vorsprünge (30, 30') derart angeordnet sind, dass sie zu der Bremsscheibendrehachse (2a) hin geneigt sind.

8. Scheibenbremse (1) nach einem der Ansprüche 5 bis 7, **dadurch gekennzeichnet, dass** der Wert des Winkels ($\alpha$)

in einem Bereich von 10°...20°, vorzugsweise 12°...17°.

9.  Scheibenbremse (1) nach einem der vorhergehenden Ansprüche, **dadurch gekennzeichnet, dass** sich der Belaghaltebügel (15) zwischen einer Unterseite der zuspannseitigen Belaghaltefeder (13) und einer Oberseite der zuspannseitigen Belagträgerplatte (3a) erstreckt, wobei die zuspannseitige Belaghaltefeder (13) auf einer Oberseite des Belaghaltebügels (15) aufliegt.

10. Scheibenbremse (1) nach einem der Ansprüche 1 bis 8, **dadurch gekennzeichnet, dass** die zuspannseitige Belaghaltefeder (13) an einer Unterseite des Belaghaltebügels (15) angebracht ist.


**Claims**

1.  Disc brake (1) for a vehicle, in particular a commercial vehicle, having a brake disc (2) with a brake disc axis of rotation (2a), at least one application-side and one rear-side brake pad (3, 4) with a backing plate (3a, 4a) each, an adapter (5) accommodating the at least two brake pads (3, 4) in a respective pad shaft (10, 10a) between a leading edge-side and a trailing edge-side adapter horn (11, 11'; 12, 12') and a bridge section (5a), wherein one of the at least two brake pads (3, 4) is held in the associated pad shaft (10, 10a) in positive-locking holder to at least one of the adapter horns (11, 11'; 12, 12') in the radial direction with respect to the brake disc axis of rotation (2a) and spring-loaded with a preloading force (Fv) pressing the one of the at least two brake discs (3, 4) away from the bridge section (5a) of the adapter (5) in the radial direction with respect to the brake disc axis of rotation (2a) against the positive-locking holder of the at least one adapter horn (11, 11'; 12, 12'), and having a brake calliper (6) overlapping the brake disc (2), wherein at the leading edge-side adapter horn (11) and the trailing edge-side adapter horn (11a) a positive-locking holder of at least the application-side brake pad (3) in the pad shaft (10) is provided, wherein the positive-locking holder forms an oblique wear compensation device with noses (20, 20') with undercuts (27, 27'), projections (30, 30') of the backing plate (3a) and the preloading force (Fv), wherein the disc brake (1) further has a pad retaining bracket (15), which is releasably attached to the brake calliper (6) and by which the rear-side brake pad (3) is held under spring load in the adapter (5),
    **characterised in that** the application-side brake pad (3) is joined with its backing plate (3a) to an application-side anti-rattle spring (13) mounted at the pad retaining bracket (15) and the application-side brake pad (3) in such a way that the application-side anti-rattle spring (13) applies a tensile force to the application-side brake pad (3) and generates the preloading force (Fv).

2.  Disc brake (1) according to claim 1, **characterised in that** the application-side brake pad (3) bears in the non-operated state of the disc brake (1) with a top side (35) of each projection (30, 30') against an underside (24) of each nose (20, 20') under the application of the preloading force (Fv).

3.  Disc brake (1) according to claim 2, **characterised in that** the noses (20, 20') of the positive-locking holders project from one each of the adapter horns (11, 11') into the pad shaft (10).

4.  Disc brake (1) according to claim 3, **characterised in that** each of the projections (30, 30') of the application-side backing plate (3a) of the application-side brake pad (3) projects outwards from a respective side of the application-side backing plate (3a), wherein recesses (40, 40') for accommodating the noses (20, 20') are formed thereabove into the backing plate (3a), in each case from the side.

5.  Disc brake (1) according to claim 4, **characterised in that** the underside (24) of each nose (20, 20') and the respectively associated top side (35) of each projection (30, 30') extend at an angle ($\alpha$) obliquely to a line of action of a braking force ($F_B$), wherein the line of action of the braking force ($F_B$) extends parallel to surfaces of support sections (26) of the bridge section (5a) of the adapter (5), said support sections (26) forming a bottom support of the application-side pad shaft (10).

6.  Disc brake (1) according to claim 5, **characterised in that** the leading edge-side nose (20) and the associated top side (35) of the leading edge-side projection (30) are formed mirror-inversely to the trailing edge-side nose (20) and the associated top side of the trailing edge-side projection (30').

7.  Disc brake (1) according to claim 6, **characterised in that** the undersides (24) - formed obliquely at the angle ($\alpha$) - of the noses (20, 20') and the respectively associated top sides (35) of the projections (30. 30') are arranged in such a way that they are inclined towards the brake disc axis of rotation (2a).

**EP 3 374 655 B1**

8. Disc brake (1) according to any of claims 5 to 7, **characterised in that** the value of the angle (α) lies in a range of 10°...20°, preferably 12°...17°.

9. Disc brake (1) according to any of the preceding claims, **characterised in that** the pad retaining bracket (15) extends between an underside of the application-side anti-rattle spring (13) and a top side of the application-side backing plate (3a), the application-side anti-rattle spring (13) lying on a top side of the pad retaining bracket (15).

10. Disc brake (1) according to any of claims 1 to 8, **characterised in that** the application-side anti-rattle spring (13) is attached to an underside of the pad retaining bracket (15).

**Revendications**

1. Frein (1) à disque pour un véhicule, notamment pour un véhicule utilitaire, comportant un disque (2) de frein ayant un axe (2a) de rotation de disque de frein, au moins une garniture (3, 4) de frein du côté du serrage et du côté arrière, ayant une plaque (3a, 4a) respective de support de garniture, un flasque (5) de frein, qui reçoit les au moins deux garnitures (3, 4) de frein dans un puits (10, 10a) respectif de la garniture entre une corne (11, 11' ; 12, 12') de flasque de frein du côté de l'entrée et du côté de la sortie et une partie (5a) de pontet, dans lequel l'une des au moins deux garnitures (3, 4) de frein est maintenue dans le puits (10, 10a) de la garniture qui lui appartient par au moins l'une des cornes (11, 11' ; 12, 12') de flasque de frein dans une fixation à complémentarité de forme dans la direction radiale par rapport à l'axe (2a) de rotation du disque de frein et est soumise à l'action d'un ressort avec une force (Fv) de précontrainte, qui repousse la une des au moins deux garnitures (3, 4) de frein de la partie (5a) du pontet du flasque (5) de frein sur la fixation à complémentarité de forme de la au moins une corne (11, 11' ; 12, 12') de flasque de frein, en l'éloignant dans la direction radiale par rapport à l'axe (2a) de rotation du disque de frein, et un étier (6) de frein chevauchant le disque (2) de frein, dans lequel il est prévu, sur la corne (11) de flasque de frein du côté de l'entrée et sur la corne (11') de flasque de frein du côté de la sortie, respectivement une fixation à complémentarité de forme au moins de la garniture (3) de frein du côté du serrage dans le puits (10) de garniture, dans lequel la fixation à complémentarité de forme forme, par des becs (20, 20') ayant des contredépouilles (27, 27') des saillies (30, 30') de la plaque (3a) de support de garniture de la garniture (3) de frein du côté du serrage et par la force (Fv) de précontrainte, un dispositif de compensation d'usure incliné,

   dans lequel le frein (1) à disque a en outre un archet (15) de maintien de la garniture, qui est fixé de manière amovible à l'étrier (6) de frein et par lequel la garniture (3) de frein du côté arrière est maintenue dans le flasque (5) de frein en étant soumise à l'action d'un ressort,
   **caractérisé en ce que** la garniture (3) de frein du côté du serrage est reliée, par sa plaque (3a) de support de garniture, à un ressort (13) de maintien de la garniture du côté du serrage, qui est monté sur l'archet (15) de maintien de la garniture et la garniture (3) de frein du côté du serrage, de manière à ce que le ressort (13) de maintien de la garniture du côté du serrage applique une force de traction à la garniture (3) de frein du côté du serrage et produise la force (Fv) de précontrainte.

2. Frein (1) à disque suivant la revendication 1, **caractérisé en ce que** la garniture (3) de frein du côté du serrage s'applique, en étant soumise à la force (Fv) de précontrainte, à l'état non actionné du frein (1) à disque par un côté (35) supérieur de chaque saillie (30, 30') respectivement à un côté (24) inférieur de chaque bec (20, 20').

3. Frein (1) à disque suivant la revendication 2, **caractérisé en ce que** les becs (20, 20') de fixation à complémentarité de forme font saillie dans le puits (10) de garniture par respectivement l'une des cornes (11, 11') de flasque du frein.

4. Frein (1) à disque suivant la revendication 3, **caractérisé en ce que** les saillies (30, 30') de la plaque (3a) de support de garniture du côté du serrage de la garniture (3) de frein du côté du serrage font saillie respectivement vers l'extérieur par un côté respectif de la plaque (3a) de support de garniture du côté du serrage, dans lequel, par elles sont formées, respectivement depuis le côté, des évidements (40, 40') de réception des becs (20, 20') dans la plaque (3a) de support de garniture.

5. Frein (1) à disque suivant la revendication 4, **caractérisé en ce que** le côté (24) inférieur de chaque bec (20, 20') et le côté (35) supérieur qui lui appartient respectivement de chaque saillie (30, 30') fait un angle (α) incliné par rapport à une ligne d'action d'une force (F$_B$) de freinage, dans lequel la ligne d'action de la force (F$_B$) de freinage est parallèle à des surfaces de partie (26) d'appui de la partie (5a) de pontet du flasque (5) de frein, dans lequel ces parties (26) d'appui forment un support inférieur du puits (10) de garniture du côté du serrage.

6. Frein (1) à disque suivant la revendication 5, **caractérisé en ce que** le bec (20) du côté de l'entrée et le côté (35) supérieur qui lui appartient de la saillie (30) d'entrée sont symétriques comme un miroir du bec (20) du côté de la sortie et du côté supérieur qui lui appartient de la saillie (30') du côté de la sortie.

7. Frein (1) à disque suivant la revendication 6, **caractérisé en ce que** les côtés (24) inférieurs constitués de manière inclinée suivant l'angle ($\alpha$) des becs (20, 20') et les côtés (35) supérieurs qui leur appartiennent respectivement des saillies (30, 30') sont disposés de manière à être inclinés par rapport à l'axe (2a) de rotation du disque de frein.

8. Frein (1) à disque suivant l'une des revendications 5 à 7, **caractérisé en ce que** la valeur de l'angle ($\alpha$) est dans une plage de 10°... 20°, de préférence, de 12°... 17°.

9. Frein (1) à disque suivant l'une des revendications précédentes, **caractérisé en ce que** l'archet (15) de maintien de la garniture s'étend entre un côté inférieur du ressort (13) de maintien de garniture du côté du serrage et un côté supérieur de la plaque (3a) de support de garniture du côté du serrage, le ressort (13) de maintien de garniture du côté du serrage s'appliquant à un côté supérieur de l'archet (15) de maintien de la garniture.

10. Frein (1) à disque suivant l'une des revendications 1 à 8, **caractérisé en ce que** le ressort (13) de maintien de la garniture du côté du serrage est mis sur un côté inférieur de l'archet (15) de maintien de la garniture.

Fig. 1

Fig. 2

HDR

RS

EL

AL

ZS

EP 3 374 655 B1

15

Fig. 3

Fig. 4

EP 3 374 655 B1

17

Fig. 5

EP 3 374 655 B1

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013143993 A1
- US 8540061 B1
- DE 102012002734 A1
- WO 9950566 A1